# EUROPEAN PATENT APPLICATION

(11) **EP 3 065 221 A1**
(43) Date of publication of application: **07.09.2016**
(21) Application number: 15157317.7
(22) Date of filing: 03.03.2015
(51) Int. Cl.: H01R 4/70, H01R 4/02, H02G 15/18, H01R 43/00

(54) **Method for providing a connection between at least two cables and device for providing an insulated cable connection**

(71) Applicant: Delphi Technologies, Inc., Troy MI 48007 (US)
(72) Inventor: Widaj, Jakub, 30-383 Krakow (PL); Mos, Wojciech, 30-633 Krakow (PL)
(74) Representative: Delphi France SAS

(57) **Abstract**

The invention relates to a method for providing a connection between at least two cables, and a device for providing insulated cable connections. The method comprising the following steps: removing the insulation at a free end of the electrical cables; arranging the uninsulated cable strands; connecting the uninsulated cable strands by welding, soldering and/or crimping; providing a sensor adapted to sense at least one of the two proximal end positions of the cable connection; aligning the cable connection relative to the sensor, such that the two proximal end positions of the cable connection are in a predetermined position; and insulating the cable connection with an insulating member.

## Description

### Field of the invention

The invention relates to a method for providing a connection between at least two electrical cables and to a device for providing an insulated cable connection.

### Background of the invention

The electrically conductive connecting of electrical cables is well-known in the art. Typically, the insulation at the free end of the electrical cables has to be removed, before the electrical cables can be connected with each other. Usually, two electrical cables are connected, however, connections of three or more electrical cables are also possible. Such multi-cable connections are used to provide branching-off the electrical cables for example for a cable harness. Such cable harnesses and cable connections are widely spread and are used for example in the industrial field, such as the automotive manufacturing.

In the art, there are known numerous different methods for connecting cables. Among these methods for connecting cables are soldering, brazing, welding, such as ultra-sonic welding, crimping, conductive gluing and the like. However, all these methods for connecting electrical cables have in common, that uninsulated cable ends (wires, splines, strands etc.) of the electrical cables are connected with each other.

To provide a secure cable connection, and to avoid any damage of or harm for the environment, these uninsulated regions of the cable connection have to be insulated. Insulating members for insulating uninsulated regions, such as insulating tapes, shrinking tubes, liquid insulations and the like are known in the art. To provide insulation that fulfills the safety requirements, in particular the insulating member has to be positioned correctly. Depending on the application, the insulating member has to overlap the primary insulation of the cables with a certain minimum length. Hence, the insulating members have to be positioned correctly relative to the position of the cable connection, or vice versa. This positioning process is often performed manually by an operator and is therefore time consuming, error-prone and expensive. Particularly in the industrial field, there is a need in the art to improve the method for connecting cables and insulating cable connections that overcomes the drawbacks described above.

### Detailed description of the invention

It is an object of the present invention to provide an improved method for providing a connection between at least two electrical cables and an improved device for insulating cable connections between electrical cables that overcomes or reduces the drawbacks described above. The object is solved by a method according to claim 1 and a device according to claim 15.

In particular, the object is solved by a method for providing a connection between at least two electrical cables, the method comprising the following steps:
a) providing at least first and second electrical cables;
b) removing the insulation at a free end of the electrical cables;
c) arranging the uninsulated cable strands into contact and parallel with each other, such that the first and second cable extend in opposite directions;
d) connecting the uninsulated cable strands by welding, soldering and/or crimping, so that a cable connection is created comprising a length (y) of uninsulated cable strands;
e) providing a sensor adapted to sense at least one of the two proximal end positions of the cable connection;
f) aligning the cable connection relative to the sensor, such that the two proximal end positions of the cable connection are in a predetermined position; and
g) insulating the cable connection with an insulating member, if the sensor senses at least one of the two proximal end positions of the cable connection.

Providing a sensor adapted to sense at least one of the two proximal end positions of the cable connection is advantageous, since the position of the cable connection as such can be detected, during the aligning of the cable connection related to the sensor, such that the two proximal end positions of the cable connection are in the predetermined position. Preferably, the sensor comprises a resistive, a capacitive, an inductive or a visual sensor, or the like. Particularly, the two connected electrical cables can be aligned with the sensor in two different ways. In the first case, the aligning is a movement in the axial direction of the connected electrical cables.

In this first case, the sensor will sense the first proximal end position of the cable connection when the first proximal end position of the cable is guided past the sensor. Depending on the predetermined position of the cable connection relative to the sensor, sensing the first proximal end position of the cable connection indicates, that the cable connection has reached its predetermined position. Alternatively, it can be necessary that the connected electrical cables have to be guided further past the sensor, until the sensor will sense the second proximal end position of the cable connection, to reach the predetermined position of the cable connection. Depending on the predetermined position of the cable connection relative to the sensor, the position of the cable connection - and in particular of the uninsulated cable strands - can be determined via a control device, since at least one defined point, e.g. the proximal end position of the cable connection, and the length "y" of the uninsulated cable strands are known. Thus, the method can proceed with insulating the cable connection with an insulating member (i.e. step g)), if the sensor senses at least one of the two proximal end positions of the cable connection. Hence, a simple connecting and insulating method is provided, that is less error-prone than a pure manual connecting and insulating method.

In the second case, the aligning is a movement in the radial direction of the connected electrical cables. In this second case, the position of the cable connection cannot be determined distinctively, since the sensing of one proximal end position of the cable connection is not characteristic for the exact position of the cable connection, i.e. the cable connection can extend axially on both sides of the sensor. Thus, operators have to be trained, which proximal end position of the cable connection has to be aligned in proximity to the sensor, to determine whether the cable connection is in the determined position. However, also in the second case, the error rate can be significantly reduced, since the operators are effectively supported. Thus, a simple connecting and insulating method is provided.

Preferably, the predetermined position of the two proximal end positions of the cable connection is a position that allows insulating the cable connection with an insulating member, wherein the insulating member has two proximal ends, so that one of the two proximal ends of the insulating member is arranged in a distance "d" from the adjacent proximal end position of the cable connection, when the insulating member has been applied.

Preferably, the insulating member has an axial length "z" that is longer than the length "y" of the uninsulated cable strands of the cable connection, after the insulating member has been applied. A predetermined position of the two proximal end positions of the cable connection that allows applying the insulating member so that the insulating member at least partly overlaps the original insulation of the electrical cables with a distance "d", will lead to an insulated cable connection that fulfills the required safety requirements.

Further, if the distance "d" is chosen so that d = (z-x)/2, i.e. "d" is half the difference of the axial length "z" of the insulating member and length "y" of the cable connection, the cable connection can be centered relative to the insulating member, by aligning the cable connection relative to the sensor in the predetermined position.

Preferably, the distance "d" is within a range of 3 to 11 mm, preferably 5 to 9 mm, and most preferably 7 mm. This range of lengths "d" is advantageous, since damage of or harm for the environment can be effectively avoided.

Preferably, the insulating member is an insulating tape, a shrinking tube and/or a liquid insulation means. The insulating tape comprises preferably vinyl; however other suitable plastic materials are possible. Insulating tape as insulating member provides good stretching properties, as well as an effective and long lasting insulation. For applying the insulating tape, the tape is wrapped around the cable connection. Typically several layers of insulating tape are applied.

A shrinking tube known in the art comprises preferably one of the following materials, such as PTFE (fluoropolymer), polyvinylidene fluoride (PVDF), fluorinated ethylene propylene (FEP), or other elastomeric materials. Shrinking tubes offer a wide range of operating temperature of approximately -55° to 200° C. Shrinking tubes are preferred as insulating member, since shrinking tubes provide good abrasion resistance and environmental protection (e.g. sealing properties) for electrical cable connections. For applying a shrinking tube, an unshrunk tube is preferably arranged on the electrical cable before connecting the cable connection. After having aligned the cable connection in the predetermined position, and after the sensor has sensed the at least one of the two proximal end positions of the cable connection, the shrinking tube is slid over the cable connection to cover the uninsulated cable strands. Afterwards heat is applied, to shrink the unshrunk shrinking tube.

A liquid insulation means, is an insulation means that is applied in the liquid state on the cable connection. After being applied, the liquid insulation means cures or dries. A curing process is based on a chemical reaction, such as polymerization. A drying process is based on the evaporation of a solvent. Typical liquid insulation means are rubber based, and provide a high flexibility and good sealing properties.

Preferably, the method further comprises the following steps: providing a control device, that is connected to the sensor; sensing at least one of the two proximal end positions of the cable connection, by means of the sensor; and providing an output signal by means of the control device, if the two proximal end positions of the cable connection are in the predetermined position.

Providing an output signal is advantageous, since the operator will recognize, whether the proximal end positions of the cable connection are in the predetermined position. Preferably, the output signal is a visual signal, such as a light signal, an acoustic signal, such as a beep, or a haptic signal, such as vibration. Even more preferably, the output signal indicates whether the predetermined position has been achieved correctly. Exemplarily, the output signal could be a green light if the proximal end positions of the cable connection are in the predetermined position and a red light if the proximal end positions of the cable connection are not in the predetermined position. Most preferably, the output signal that indicates that the two proximal end positions of the cable connection are in the predetermined position is sent to an insulating device. When the insulating device receives said output signal, the cable connection will be insulated (step g)).

Preferably, the method further comprises the following step: moving the cable connection in an insulating position, for insulating the cable connection with an insulating member, if the sensor senses at least one of the two proximal end positions, and the two proximal end positions of the cable connection are in a predetermined position.

Moving the cable connection from the determined position in an insulating position, is advantageous, if the position of the sensor does not allow direct insulating. For example, when a tape has to be wrapped around the cable connection, a sensor that is in close proximity to the cable connection might hinder the insulating. In particular, such an insulating position is necessary, if the sensor is in close proximity to the cable connection, and for example a tape roll has to be guided around the cable connection in order to insulate the cable connection.

Preferably the sensor is adapted to sense two proximal end positions of the cable connection simultaneously. Sensing two end positions simultaneously is advantageous, since the position of the cable connection is clearly defined by those two proximal end positions of the cable connection. Thus, it is possible to sense distinctively, whether the cable connection is in its predetermined position, even if the aligning of the cable connection is a movement in the radial direction of the connected electrical cables (cf. second case, as described above).

Preferably, the sensor comprises two electrical contact means that form an open contact, and the method comprises further even more preferably the following step: closing the open contact formed by the two electrical contact means with the uninsulated cable strands of the cable connection, so that the two proximal end positions of the cable connection are in the predetermined position.

A sensor, having two electrical contact means that form an open contact provides a simple and robust method to sense the two proximal end positions of the cable connection. Thus the method becomes less error-prone compared to other types of sensors such as capacitive, inductive or visual sensors.

Preferably, the two electrical contact means are arranged in a distance "x" to each other, wherein the distance "x" is maximal 5 mm, preferably 3 mm and most preferably 1 mm shorter than the length "y" of the uninsulated cable strands. In other words; the distance between the two contact means is approximately equal to the distance "y" between the two proximal end points of the cable connection. Therefore, the cable connection is aligned in the predetermined position, within a certain tolerance, if the open contact is closed. Even more preferably, the distance "x" of the two electrical contact means is adjustable, and the method further comprises preferably the following step: adjusting the distance "x", prior to aligning the cable connection relative to the sensor, such that the distance "x" is maximal 5 mm, preferably 3 mm and most preferably not more than 1 mm shorter than the length "y" of the uninsulated cable strands and fixing the contact means in the adjusted position. An adjustable distance "x" is advantageous, since multiple different cable connections with different lengths "y" can be aligned in a predetermined position.

Since the electrical contact means form an open contact, which is closed, if an uninsulated cable connection is brought in contact with the electrical contact means, the sensor senses (indirectly) the proximal end positions of the uninsulated cable connection. In particular, the proximal end positions can be sensed, since the distance "x" between the electrical contact means is shorter than the length "y" of the uninsulated cable connection. Thus, in order to close the open contact formed by the electrical contact means, the uninsulated cable connection has to be aligned with the sensor, so that both electrical contacts means contact the uninsulated cable connection. Therefore, the closing of the open contact between the electrical contacts means indicates that the cable connection is in the predetermined position.

Preferably, the method further comprises the following method steps: determining the electrical resistance of the cable connection by means of the electrical contact means of the sensor via the control device; proving, whether the electrical resistance of the cable connection is below a predetermined electrical resistance threshold; and providing an output signal by means of the control device, indicating whether the electrical resistance of the cable connection is below the predetermined electrical resistance threshold. The additional measuring of the electrical resistance allows the testing of the quality of the cable connection, since the electrical resistance is one of the main characteristics of an electrical cable connection. Low electrical resistance values of the cable connection are generally preferred.

Preferably, the measured electrical resistance of the cable connection is compared to the electrical resistance threshold and an output signal is provided so that an operator will be informed, whether the cable connection fulfills the requirements, i.e. whether the electrical resistance of the cable connection is below the predetermined electrical resistance threshold. The output signal can be a visual signal, such as a light signal, an acoustic signal, such as a beep, or a haptic signal or the like. Exemplarily, the output signal could be a green light if the electrical resistance of the cable connection is below the predetermined electrical resistance threshold (i.e. the cable connection is OK) and a red light if the electrical resistance of the cable connection is above the predetermined electrical resistance threshold (i.e. the cable connection is NOK). Thus, an operator can be informed.

Preferably, the predetermined electrical resistance threshold of the cable connection is equal or preferably smaller than the electrical resistance of one of the cables having the length "y". Thus, the electrical cable connection would not negatively influence the electrical properties of the cables, when connected, i.e. the conductivity of the connected cables is particularly the same as the conductivity of an unconnected cable having the same length as the connected cables.

Preferably, the sensor comprises a recess for receiving the cable connection. This recess facilitates the alignment of the cable connection relative to the sensor. The recess can be shaped as semicircle, as triangle or any other suitable shape. Providing a recess allows a faster aligning of the cable connection, and thus production costs can be minimized.

Even more preferably, the sensor comprises a mechanical stop that is adapted to form a stop in the axial direction of the cables for a cable of the connected cables. A mechanical stop facilitates the alignment of the cable connection in axial direction. Preferably, the mechanical stop is shaped to engage with the primary insulation of one of the cables of the cable connection. However, any suitable mechanical stop is possible. Providing a mechanical stop allows a faster aligning of the cable connection, and thus production costs can be minimized.

Further, the object is also solved by a device for providing an insulated cable connection of at least two electrical cables, comprising: a sensor, adapted to sense at least one of two proximal end positions of the cable connection, wherein the cable connection is achieved by welding, soldering and/or crimping uninsulated cable strands of the cables, so that the uninsulated cable strands are in contact and parallel with each other, such that the first and second cable extend in opposite directions, and wherein the cable connection is aligned relative to the sensor, such that the two proximal end positions of the cable connection are in a predetermined position; a control device, that is connected to the sensor and adapted to receive a signal of the sensor and to provide an output signal, if the two proximal end positions of the cable connection are in the predetermined position; and an insulating device, that is adapted to insulate the cable connection with an insulating member, if the sensor senses at least one of the two proximal end positions of the cable connection.

Said device for providing an insulated cable connection of at least two electrical cables, allows a fast alignment of the cable connection and a subsequent secure insulation of the uninsulated cable strands of the cable connection. Thus, a fast secure and less error-prone manufacturing of insulated cable connections can be achieved.

### Detailed description of the figures

In the following it is referred to preferred embodiments of the invention that are described in greater detail with reference to the figures:
- Fig. 1: shows two electrical cables that are connected and insulated in a cut view,
- Fig. 2: shows two connected electrical cables that are aligned in proximity to a predetermined position,
- Fig. 3A: shows a device for insulating connected electrical cables,
- Fig. 3B: shows two electrical cables that are connected and insulated with an insulating tape in a cut view,
- Fig. 4A: shows two electrical cables that are aligned in proximity to a predetermined position, with a shrinking tube in a cut view, and
- Fig. 4B: shows two electrical cables that are connected and insulated with a shrinking tube in a cut view.

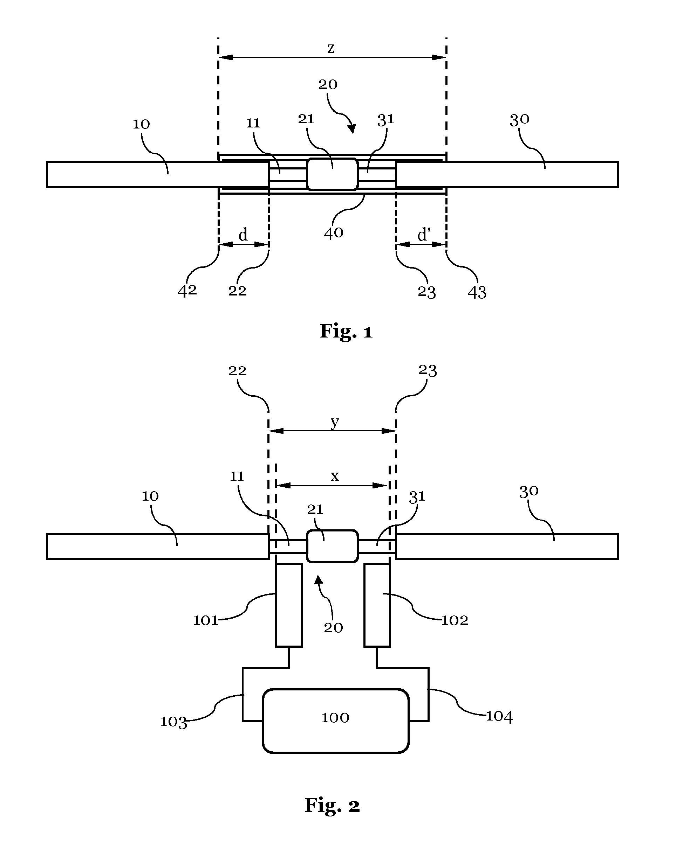

Fig. 1 shows two connected and insulated electrical cables 10, 30. The primary insulation at the free ends of the cables 10, 30 has been removed, to expose the uninsulated cable strands 11, 31. Further, the uninsulated cable strands 11, 31 are arranged into contact and parallel with each other, such that the first and second cable 10, 30 extends in opposite directions. Still further, the uninsulated cable strands 11, 31 are connected by e.g. welding, soldering and/or crimping, so that they are connected via a welded, soldered or crimped portion 21, that forms part of the cable connection 20. The uninsulated cable connection 20 is - after establishing the connection - insulated by means of an insulating member 40, such as a shrinking tube. The insulating member 40 is applied, such that the two proximal ends 42, 43 of the insulating member 40 are arranged in a distance d, respectively in a distance d' from the adjacent proximal end positions 22, 23 of the cable connection 20, i.e. the insulating member 40 overlaps the primary insulation of the cables 10, 30 with a distance d, d'.

Fig. 2 shows two connected electrical cables 10, 30 that are aligned in proximity to a predetermined position. The electrical cables 10, 30 are connected at their uninsulated cable strands 11, 31 via a welded, soldered or crimped portion 21 of the cable connection 20. The cable connection 20 comprises a length y of uninsulated cable strands 11, 31 and conductive portion 21. Further, a sensor having two electrical contact means 101, 102 is provided. The electrical contact means 101, 102 form an open contact and are connected via connecting means 103, 104 with a control device 100. If the uninsulated cable connection 20 is brought in contact with the electrical contact means 101, 102 the open contact is closed, and the sensor senses the proximal end positions 22, 23 of the uninsulated cable connection 20. In particular, the proximal end positions 22, 23 can be sensed, since the distance x between the electrical contact means 101, 102 is shorter than the length y of the uninsulated cable connection 20. Thus, in order to close the open contact, formed by the electrical contact means 101, 102, the uninsulated cable connection 20 has to be aligned with the sensor, so that both electrical contacts 101, 102 are in contact with the uninsulated cable connection 20. Therefore, closing the contact between the electrical contacts means 101, 102 indicates that the cable connection is in the predetermined position. Preferably, the control device 100 provides an output signal, indicating that the electrical contact of the electrical contact means 101, 102 has been closed. Still further, the control device 100 is preferably adapted to measure the electrical resistance of the cable connection 20, and judge whether the cable connection 20 fulfills predetermined requirements, such as a predetermined electrical resistance threshold.

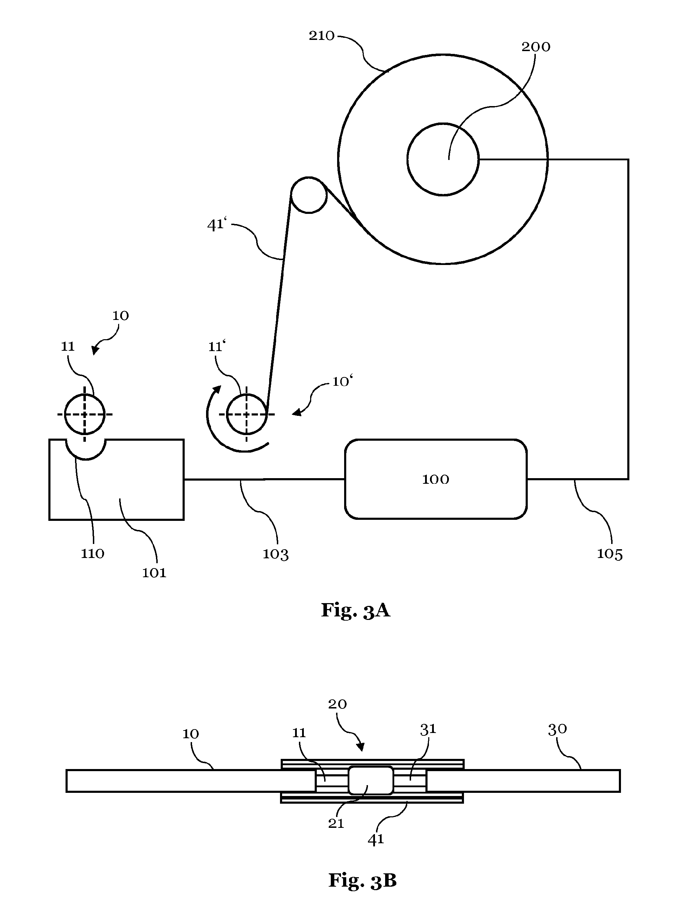

Fig. 3A shows a device 200 for insulating connected electrical cables 10. Fig. 3A is a cut side view of the connected electrical cables 10, 30 of Fig. 3B that is cut in the region of the cable strand 11 of the electrical cable 10. In a first position of the electrical cable 10 (indicated by reference signs 10, 11) a sensor 101 will sense, whether the cable connection is in the predetermined position. The sensor 101 is provided with a recess 110 to facilitate the radial alignment of the cable connection. If the sensor senses a proximal end position of the cable connection, i.e. if the cable connection is in the predetermined position, a signal is sent to the control device 100 via the connecting means 103. The control device 100 provides an output signal that is sent via the connecting means 105 to the insulating device 200. The insulating device 200 comprises a tape role 210 of insulating tape 41'. To apply the insulating tape 41' on the cable connection 20, the cable connection 20 comprising at least the cable 10 and the cable strand 11 is moved in the insulating position (indicated by reference signs 10', 11'). In this position, the insulating tape 41' is applied by rotating the cable connection 20.

Fig. 3B shows two electrical cables 10, 30 that are connected and insulated with an insulating tape 41 in a cut view, as described with reference to Fig. 3A. As can be seen, the cable connection 20 comprising the uninsulated cable strands 11, 31 and the portion 21 is completely insulated by means of the insulating tape 41.

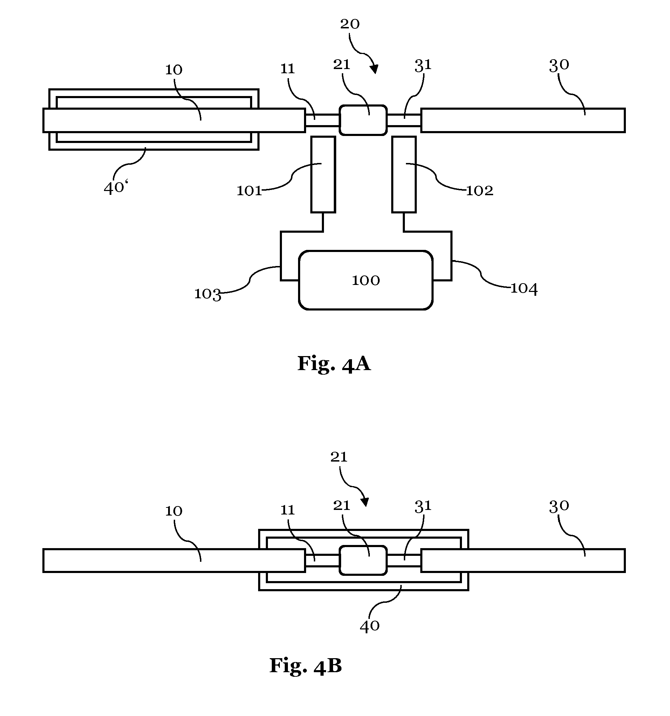

Fig. 4A shows two connected electrical cables 10, 30 that are aligned in proximity to a predetermined position. The electrical cables 10, 30 are connected at their uninsulated cable strands 11, 31 via a welded, soldered or crimped portion 21 of the cable connection 20. Further, the electrical contact means 101, 102 that are connected via connecting means 103, 104 with a control device 100 as described with reference to Fig. 2 are provided. As can be seen, an unshrunk shrinking tube 40' is arranged on the electrical cable 10. After having aligned the cable connection in the predetermined position, and after the sensor has sensed the at least one of the two proximal end positions of the cable connection, the shrinking tube is slid over the cable connection to cover the uninsulated cable strands 11, 31, as can be seen in Fig. 4B. To achieve an insulated cable connection, as shown in Fig. 1, heat has to be applied, to shrink the unshrunk shrinking tube 40'.

### List of reference signs:

- 10, 30:: Electrical cable
- 11, 31:: uninsulated cable strand
- 20:: Cable connection
- 21:: Welded, soldered or crimped portion of the cable connection
- 22, 23:: Proximal end positions of the cable connection
- 40, 41:: Insulating member (insulating tape, shrinking tube)
- 40', 41':: Not yet applied/positioned insulating member
- 42, 43:: proximal ends of the insulating member
- 100:: Control device
- 101, 102:: Sensor (electrical contacts)
- 103, 104, 105:: Connecting means
- 110:: Recess
- 200:: Insulating device
- 210:: Tape roll of insulating tape
- x: Distance of the electrical contact means
- y: Length of uninsulated cable strands
- z: Axial length of the insulating member
- d, d': Overlapping distance of the insulating member

## Claims

1. Method for providing a connection between at least two electrical cables (10, 30), the method comprising the following steps:
a) providing at least first and second electrical cables (10, 30);
b) removing the insulation at a free end of the electrical cables (10, 30);
c) arranging the uninsulated cable strands (11, 31) into contact and parallel with each other, such that the first and second cable (10, 30) extend in opposite directions;
d) connecting the uninsulated cable strands (11, 31) by welding, soldering and/or crimping, so that a cable connection (20) is created comprising a length (y) of uninsulated cable strands (11, 31);
e) providing a sensor (101, 102) adapted to sense at least one of the two proximal end positions (22, 23) of the cable connection (20);
f) aligning the cable connection (20) relative to the sensor (101, 102), such that the two proximal end positions (22, 23) of the cable connection (20) are in a predetermined position; and
g) insulating the cable connection (20) with an insulating member (40; 41), if the sensor senses at least one of the two proximal end positions (22, 23) of the cable connection (20).

2. The method according to claim 1, wherein the predetermined position of the two proximal end positions (22, 23) of the cable connection (20) is a position, that allows insulating the cable connection (20) with an insulating member (40; 41), wherein the insulating member (40; 41) has two proximal ends (42, 43), so that one of the two proximal ends of the insulating member (40; 41) is arranged in a distance (d, d') from the adjacent proximal end position (22, 23) of the cable connection (20), when the insulating member (40; 41) has been applied.

3. The method according to claim 3, wherein the distance (d, d') is within a range of 3 to 11 mm, preferably 5 to 9 mm, and most preferably 7 mm.

4. The method according to any of the preceding claims, wherein the insulating member (40; 41) is an insulating tape, a shrinking tube and/or a liquid insulation means.

5. The method according to any of the preceding claims, wherein the method comprises the following steps:
providing a control device (100), that is connected to the sensor (101, 102);
sensing at least one of the two proximal end positions (22, 23) of the cable connection (20), by means of the sensor (101, 102); and
providing an output signal by means of the control device (100), if the two proximal end positions (22, 23) of the cable connection (20) are in the predetermined position.

6. The method according to any of the preceding claims, wherein the method comprises the following step:
moving the cable connection (20) in an insulating position, for insulating the cable connection (20) with an insulating member (40, 41), if the sensor (101, 102) senses at least one of the two proximal end positions (22, 23), and the two proximal end positions (22, 23) of the cable connection (20) are in a predetermined position.

7. The method according to any of the preceding claims, wherein the sensor is adapted to sense two proximal end positions (22, 23) of the cable connection (20) simultaneously.

8. The method according to any of the preceding claims, wherein the sensor comprises two electrical contact means (101, 102) that form an open contact, and wherein the method comprises the following step:
closing the open contact formed by the two electrical contact means (101, 102) with the uninsulated cable strands (11, 31) of the cable connection (20), so that the two proximal end positions (22, 23) of the cable connection (20) are in the predetermined position.

9. The method according to claim 8, wherein the two electrical contact means (101, 102) are arranged in a distance (x) to each other, and wherein the distance (x) is maximal 5 mm, preferably 3 mm and most preferably 1 mm shorter than the length (y) of the uninsulated cable strands (11, 31).

10. The method according to any of claims 8 or 9, wherein the distance (x) of the two electrical contact means (101, 102) is adjustable, and wherein the method comprises the following step:
adjusting the distance (x), prior to aligning the cable connection (20) relative to the sensor, such that the distance (x) is maximal 5 mm, preferably 3 mm and most preferably 1 mm shorter than the length (y) of the uninsulated cable strands (11, 31).

11. The method according to any of claims 9 or 11, comprising the following method steps:
determining the electrical resistance of the cable connection (20) by means of the electrical contact means (101, 102) of the sensor via the control device (100);
proving, whether the electrical resistance of the cable connection (20) is below a predetermined electrical resistance threshold; and
providing an output signal by means of the control device (100), indicating whether the electrical resistance of the cable connection (20) is below the predetermined electrical resistance threshold.

12. The method according to claim 11, wherein the predetermined electrical resistance threshold of the cable connection (20) is equal or preferably smaller than the electrical resistance of one of the cables (10, 30) having the length (y).

13. The method according to any of the preceding claims, wherein the sensor (101, 102) comprises a recess (110) for receiving the cable connection (20).

14. The method according to any of the preceding claims, wherein the sensor (101, 102) comprises a mechanical stop, that is adapted to form a stop in the axial direction of the cables (10, 30) for a cable (10; 30) of the connected cables (10, 30).

15. Device for providing an insulated cable connection (20) of at least two electrical cables (10, 30), comprising:
a sensor (101, 102), adapted to sense at least one of two proximal end positions (22, 23) of the cable connection (20), wherein the cable connection (20) is achieved by welding, soldering and/or crimping uninsulated cable strands (11, 31) of the cables (10, 30), so that the uninsulated cable strands (11, 31) are in contact and parallel with each other, such that the first and second cable (10, 30) extend in opposite directions, and wherein the cable connection (20) is aligned relative to the sensor (101, 102), such that the two proximal end positions (22, 23) of the cable connection (20) are in a predetermined position;
a control device (100), that is connected to the sensor (101, 102) and adapted to receive a signal of the sensor and to provide an output signal, if the two proximal end positions (22, 23) of the cable connection (20) are in the predetermined position; and
an insulating device (200), that is adapted to insulate the cable connection (20) with an insulating member (40; 41), if the sensor senses at least one of the two proximal end positions (22, 23) of the cable connection (20).
